# EUROPEAN PATENT SPECIFICATION

(11) **EP 2 574 100 B1**
(45) Date of publication and mention of the grant of the patent: **19.07.2017**
(21) Application number: 11852481.8
(22) Date of filing: 12.12.2011
(51) Int. Cl.: H04W 28/22, H04W 36/00

(54) **RATE ADJUSTMENT METHOD AND APPARATUS APPLIED TO TRFO VOICE CALL SWITCHING**
FREQUENZANPASSUNGSVERFAHREN UND -VORRICHTUNG FÜR TRFO-SPRACHRUFUMSCHALTUNG
PROCÉDÉ ET APPAREIL D'AJUSTEMENT DE DÉBIT APPLIQUÉ À UNE COMMUTATION D'APPEL VOCAL TRFO

(30) Priority: 28.12.2010 CN 201010623128
(43) Date of publication of application: 27.03.2013
(73) Proprietor: Huawei Technologies Co., Ltd., Longgang District Shenzhen, Guangdong 518129 (CN)
(72) Inventor: WANG, Hongxing, Guangdong 518129 (CN)
(74) Representative: Goddar, Heinz J.
(86) International application number: PCT/CN2011/083837
(87) International publication number: WO 2012/089010

(56) References cited:
- EP-A1- 2 059 074
- WO-A1-2008/086825
- WO-A2-2009/100979
- CN-A- 102 142 930
- CN-A- 102 143 544
- CN-A- 102 143 544
- "3rd Generation Partnership Project; Technical Specification Group Core Network and Terminals; Out of band transcoder control; Stage 2 (Release 9)", 3GPP STANDARD; 3GPP TS 23.153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 17 December 2010 (2010-12-17), pages 1-102, XP050462240, [retrieved on 2010-12-17]
- "3rd Generation Partnership Project; Technical Specification Group Services and System Aspects; Mandatory speech codec; Adaptive Multi-Rate (AMR) speech codec; Interface to Iu, Uu and Nb (Release 8)", 3GPP STANDARD; 3GPP TS 26.102, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 6 April 2010 (2010-04-06), pages 1-29, XP050402418, [retrieved on 2010-04-06]
- HUAWEI TECHNOLOGIES CO ET AL: "Discussion on AMR Codec Mode adaptation during Handover procedure", 3GPP DRAFT; GP-111208, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Gothenburg; 20110829, 25 August 2011 (2011-08-25), XP050536852, [retrieved on 2011-08-25]
- 'Out of band transcoder control' 3GPP TS 23.153 V9.1.0 22 December 2010, XP050462240

## Description

### FIELD OF THE INVENTION

The present invention relates to mobile communications technologies, and in particular to a rate adjustment method and device for TrFO voice call handover.

### BACKGROUND OF THE INVENTION

As telecom networks continuously evolve toward IP networks, the A interface between a base station subsystem (Base Station Subsystem, BSS) and a circuit switched (Circuit Switched, CS) core network on the 2G network also faces evolution from time division multiplexing (Time Division Multiplexing, TDM) bearer to IP bearer. In the 3GPP R8 version, the A interfaces defines the IP bearer modes. In one mode, the A interface bears the compression codec, thereby reducing end-to-end encoding/decoding times, improving the voice quality, and saving transmission resources on the A interface. There are multiple types of compression codecs on the A interface, including multi-rate codec. Multi-rate codec includes adaptive multi-rate (Adaptive Multi-Rate, AMR) codec and adaptive multi-rate wideband (Adaptive Multi-Rate Wideband, AMR-WB) codec. For multi-rate codec, during call setup or handover, its initial rate needs to be in a low rate mode.

Voice calls may be divided into transcoder free operation (Transcoder Free Operation, TrFO) voice calls and non-TrFO voice calls. In a TrFO voice call, no codec resources exist on the voice call path. In a non-TrFO voice call, codec resources exist on the voice call path.

When the handover occurs, if the TrFO voice call that uses multi-rate codec is used after the handover, and if the rate used by the non-handover side that uses multi-rate codec is high before the handover, as the initial rate after the handover is low, a frame may be lost if no rate-related processing is performed during the handover.

Document WO 2009/100979 A2 discloses a method to perform codec changes for ongoing calls on an IP-based A interface between a base station subsystem and a mobile switching center, where the transcoding functionality is removed from the base station subsystem. The method is based on a handover procedure, and a preparation and an execution phase are controlled via signalling messages between the base station subsystem and the mobile switching center.

### SUMMARY OF THE INVENTION

Embodiments of the present invention provide a rate adjustment method and device for TrFO voice call handover to avoid possible frame loss due to mismatched rates when a call is handed over to a TrFO call.

An embodiment of the present invention provides a rate adjustment method for TrFO voice call handover, including:
receiving, by a media gateway, MGW, a message for adding a termination after handover, where the message for adding the termination after the handover is sent by a mobile switch center server, MSC-S, upon the MSC-S receiving a handover request message, and the handover forms a TrFO call that uses a multi-rate codec after the handover; and
sending, by the MGW, a message that is used for rate adjustment to a non-handover side that uses a multi-rate codec, so that the non-handover side adjusts a rate of the non-handover side to an initial rate after receiving the message that is used for rate adjustment.

An embodiment of the present invention provides a rate adjustment device for TrFO voice call handover, wherein the device is a MGW, the MGW including:
a receiving module, configured to receive a message for adding a termination after handover, wherein the message for adding a termination after the handover is sent by a MSC-S upon the MSC-S receiving a handover request message, and the handover forms a TrFO call that uses a multi-rate codec after the handover; and
a sending module, configured to send a message that is used for rate adjustment to a non-handover side that uses a multi-rate codec, so that the non-handover side adjusts a rate of the non-handover side to an initial rate after receiving the message that is used for rate adjustment.

As shown in the technical solutions, according to the embodiments of the present invention, when a TrFO call is formed after the handover, a message that is used for rate adjustment is sent to a non-handover side, where the message may be used to adjust the rate of the non-handover side to an initial rate. As the initial rate is low, and the rate after the handover is also a low rate, rate matching before and after the handover may be implemented, avoiding frame loss.

### BRIEF DESCRIPTION OF THE DRAWINGS

To illustrate the technical solutions in the embodiments of the present invention more clearly, the following briefly describes the accompanying drawings required for describing the embodiments. Apparently, the accompanying drawings in the following description show some embodiments of the present invention, and persons of ordinary skill in the art can derive other drawings from the accompanying drawings without creative efforts.
FIG. 1 is a schematic flow chart of a method according to a first embodiment of the present invention;
FIG. 2 is a schematic structural diagram of a system used in an embodiment of the present invention;
FIG. 3 is a schematic flow chart of handover according to an embodiment of the present invention;
FIG. 4 is a schematic flow chart of a method according to a second embodiment of the present invention;
FIG. 5 is a schematic flow chart of a method according to a third embodiment of the present invention;
FIG 6 is a schematic flow chart of a method according to a fourth embodiment of the present invention;
FIG. 7 is a schematic flow chart of a method according to a fifth embodiment of the present invention;
FIG. 8 is a schematic flow chart of a method according to a sixth embodiment of the present invention; and
FIG. 9 is a schematic structural diagram of a device according to a seventh embodiment of the present invention.

### DETAILED DESCRIPTION OF THE EMBODIMENTS

To make the objectives, technical solutions, and advantages according to the embodiments of the present invention more comprehensible, the following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

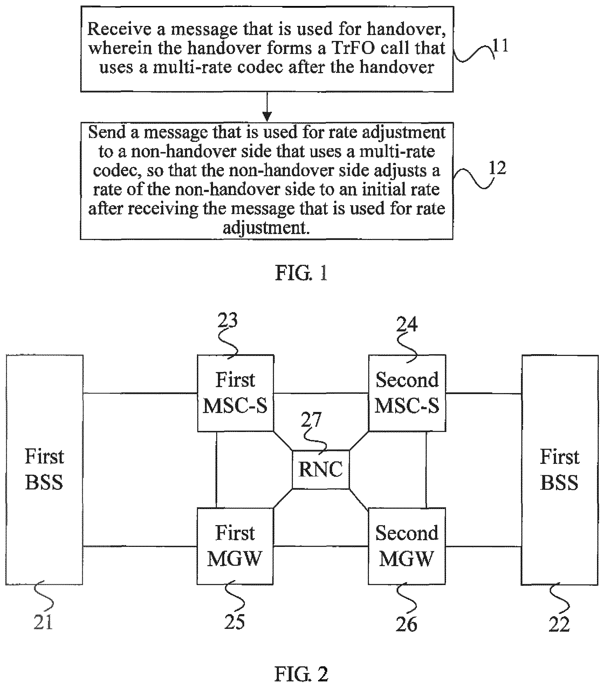

FIG 1 is a schematic flow chart of a method according to a first embodiment of the present invention, including:
Step 11: Receive a message that is used for handover, wherein the handover forms a TrFO call that uses a multi-rate codec after the handover.
Step 12: Send a message that is used for rate adjustment to a non-handover side that uses a multi-rate codec, so that the non-handover side adjusts a rate of the non-handover side to an initial rate after receiving the message that is used for rate adjustment.

Wherein, the execution subject may be a media gateway (Media Gateway, MGW) or a source base station controller (Base Station Controller, BSC). The corresponding message that is used for the handover and the message that is used for rate adjustment also vary. For the specific content, reference may be made to the embodiments.

According to this embodiment, when the TrFO call that uses a multi-rate codec is formed after the handover, a message that is used for rate adjustment is sent to a non-handover side that uses a multi-rate codec, where the message may be used to adjust the rate of the non-handover side to an initial rate. As the initial rate is low, and the rate after the handover is also a low rate, rate matching before and after the handover may be implemented, avoiding frame loss.

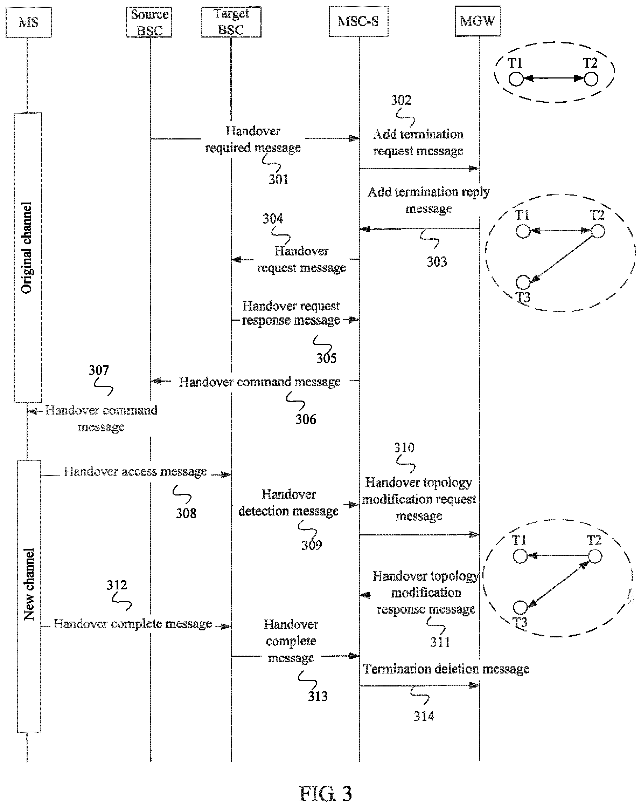

To help better understand the embodiments of the present invention, the system and handover procedure involved in the embodiments are described first. FIG. 2 is a schematic structural diagram of a system used in an embodiment of the present invention, and FIG. 3 is a schematic flow chart of handover according to an embodiment of the present invention.

As shown in FIG. 2, the communication system includes a first BSS 21, a second BSS 22, a first mobile switch center server (Mobile Switch Center Server, MSC-S) 23, a second MSC-S 24, a first MGW 25, a second MGW 26, and a radio network controller (Radio Network Controller, RNC) 27 on a 3G network. Wherein, the first BSS 21, first MSC-S 23, and first MGW 25 serve a first termination, and the second BSS 22, second MSC-S 24, and second MGW 26 serve a second termination. Wherein, the termination may be a mobile station (Mobile Station, MS). The interfaces between the BSS and the MGW and between the BSS and the MSC-S are A interfaces, the interface between MSC-Ss is the Nc interface, the interface between MGWs is the Nb interface, and the interface between the MSC-S and the MGW is the Mc interface. In addition, the interfaces between the MGW and the RNC and between the MSC-S and the RNC are Iu interfaces. This embodiment takes a case where different BSSs correspond to different MSC-Ss and MGWs for example. It may be understood that different BSSs may also be managed by the same MSC-S and MGW.

As shown in FIG. 3, in this embodiment, assume that the two ends of a call before the handover are respectively a T1 end and a T2 end, where the T2 end is a non-handover side, and the T1 end is a handover side that involves the handover from the T1 end to a T3 end. A source BSC is a BSC corresponding to the T1 end, and a target BSC is a BSC corresponding to the T3 end.

This embodiment takes a case where both ends of a call are managed by a same MSC-S and a same MGW for example. When they are managed by different MSC-Ss and MGWs, the interface between MSC-Ss and the interface between MGWs may be used to transfer messages. The handover procedure according to this embodiment includes:
Step 301: The source BSC sends a handover required (Handover Required) message to an MSC-S.
Step 302: The MSC-S sends an add termination request (ADD Termination Request) message to an MGW, where the message is used by the MGW to add T3 as a termination after the handover.
Step 303: The MGW sends an add termination reply (ADD Termination Reply) message to the MSC-S.
Step 304: The MSC-S sends a handover request (Handover Request) message to a target BSC.
Step 305: The target BSC returns a handover request response (Handover Request ACK) message to the MSC-S.
Step 306: The MSC-S sends a handover command (Handover Command) message to the source BSC.
Step 307: The source BSC sends a handover command (Handover Command) message to an MS.
Step 308: The MS sends a handover access (Handover Access) message to the target BSC.
Step 309: The target BSC sends a handover detection (Handover Detect) message to the MSC-S.
Step 310: The MSC-S sends a handover topology modification (MOD) request message to the MGW.
Step 311: The MGW sends a handover topology modification (MOD) response message to the MSC-S.
Step 312: The MS sends a handover complete (Handover Complete) message to the target BSC.
Step 313: The target BSC sends the handover complete (Handover Complete) message to the MSC-S.
Step 314: The MSC-S sends a termination deletion message (SUB T1 req) to the MGW.

In addition, certain parameters are described as follows:
1) Full rate FR AMR and half rate HR_AMR are two common AMR compatible codecs. Full AMR indicates an FR_AMR codec, or a universal mobile telecommunications system (Universal Mobile Telecommunications System, UMTS)_AMR2 that has a same rate collection as FR_AMR. Wherein, the rate collection corresponding to FR_AMR includes the following rates: 12.2 kbps, 7.4 kbps, 5.9 kbps, and 4.75 kbps.
   Half AMR indicates an HR_AMR or a UMTS_AMR2 that has a same rate collection as HR_AMR. Wherein, t he rate collection corresponding to HR_AMR includes the following rates: 7.4 kbps, 5.9 kbps, and 4.75 kbps.
2) As stipulated in the existing protocol, during call setup or the handover, the initial rate needs to work in a low-rate mode specifically as follows:
   If the rate collection includes only one rate, the initial rate is the rate.

If the rate collection includes two or three rates, the initial rate is the lowest rate.

If the rate collection includes four rates, the initial rate is the second lowest rate, for example, 5.9 kbps in the corresponding rate collection of FR_AMR.

According to the handover procedure and parameter description, if T2 and T3 form a TrFO call after the handover, the frame loss phenomenon may exist in the following scenarios:
Scenario 1: The codec for T2 is full AMR, and the codec for T3 is half AMR.
   Before the handover, T2 may work at 12.2 kbps. After the handover, however, T3 does not support 12.2 kbps. If T2 does not lower the rate in advance, the rates of T2 and T3 do not match. As the call is a TrFO call, where no codec conversion resources are available to convert the rates of both, frame loss may occur.
Scenario 2: The codec for T2 is full AMR, and the codec for T3 is full AMR.
   T3 is a new channel, and needs to use the initial rate according to the existing protocol. The initial rate is low. For example, when T2 works at 12.2 kbps before the handover, but the initial rate of T3after the handover is 5.9 kbps (second lowest rate), the rates of T2 and T3 do not match. As the call is a TrFO call, where no codec conversion resources are available to convert the rates of both, frame loss may occur.
Scenario 3: The codec for T2 is half AMR, and the codec for T3 is half AMR.

Similar to the description of the scenario where both use full AMR, the rates of T2 and T3 may not match. As the call is a TrFO call, where no codec conversion resources are available to convert the rates of both, frame loss may occur.

Based on the preceding description, when the call after the handover is a TrFO call, the non-handover side needs to be instructed for rate adjustment. According to whether the call type before the handover is a TrFO call and according to different execution subjects, different corresponding embodiments may be involved. For specific content, reference may be made to each of the embodiments below.

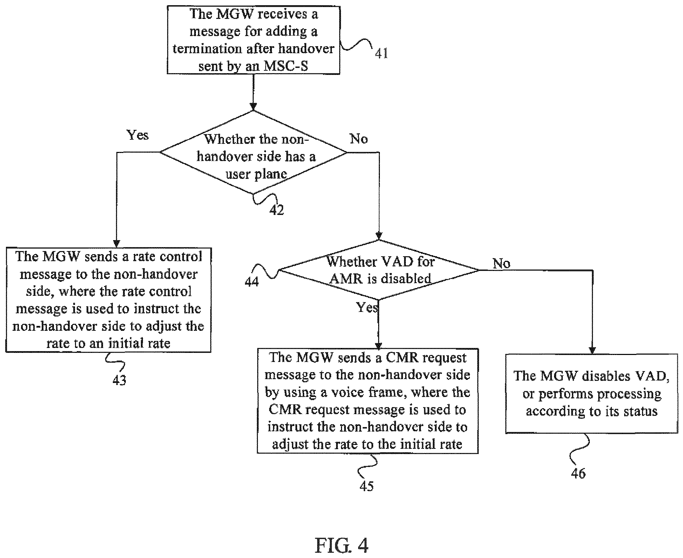

FIG. 4 is a schematic flow chart of a method according to a second embodiment of the present invention. This embodiment takes a case where a non-TrFO call is involved before the handover for example. As shown in FIG. 4, this embodiment includes:
Step 41: An MGW receives a message for adding a termination after the handover sent by an MSC-S.

For specific content, reference may be made to steps 301 and 302.

Step 42: After determining that the handover involves handing over a non-TrFO call to a TrFO call, the MGW judges whether the non-handover side has a user plane (UP). If yes, step 43 is performed; otherwise, step 44 is performed.

Wherein, if codec conversion resources exist in the MGW, the ongoing call is a non-TrFO call; if no codec conversion resources exist, the ongoing call is a TrFO call. In addition, during conversation of both ends, a closed or non-closed mode may be configured. If the closed mode is used, the UP exists; otherwise, no UP exists.

Step 43: The MGW sends a rate control (Rate Control) message to the non-handover side, where the rate control message is used to instruct the non-handover side to adjust the rate to an initial rate.

The MGW may send the rate control message to the non-handover side via an Iu asynchronous transfer mode (Asynchronous Transfer Mode, ATM) interface, an Iu IP interface, or a bearer independent call control protocol (Bearer Independent Call Control protocol, BICC) Nb interface.

For example, when the non-handover side belongs to a 3G system, and the interface bearer mode is the ATM mode, the rate control message may be sent to the RNC at the non-handover side via the Iu ATM interface; or when the non-handover side belongs to a 3G system, and the interface bearer mode is the IP mode, the rate control message may be sent to the RNC at the non-handover side via the Iu IP interface; or, the rate control message is sent to the MGW at the non-handover side via the BICC Nb interface.

After receiving the rate control message, the non-handover side may perform relevant processing according to the corresponding rate collection. For details, reference may be made to the preceding description about the initial rate.

Step 44: Judge whether voice activity detection (Voice Activity Detection, VAD) for AMR is disabled. If it is disabled, step 45 is performed; otherwise, step 46 is performed.

Wherein, i f silence detection is supported and silence frames can be generated, VAD is enabled; otherwise, VAD is disabled.

Step 45: The MGW sends a code mode request (Code Mode Request, CMR) to the non-handover side by using a voice frame, where the CMR message is used to instruct the non-handover side to adjust the rate to the initial rate.

After receiving the CMR message, the non-handover side may perform relevant processing according to the corresponding rate collection. For details, reference may be made to the preceding description about the initial rate.

Step 46: The MGW may disable VAD, and then send the CMR message by using a voice frame, where the CMR message is used to instruct the non-handover side to adjust the rate to the initial rate. Or, the MGW may also perform processing according to its status.

For example, when the status is silence period, a no-data (NO_DATA) frame (specifically, no-payload data) may be used to send the CMR message, where the CMR message is used to instruct the non-handover side to adjust the rate to the initial rate. Or, if the status is non-silence period, the CMR message may be sent by using a voice frame or a silence frame, where the CMR message is used to instruct the non-handover side to adjust the rate to the initial rate.

After receiving the CMR message, the non-handover side may perform relevant processing according to the corresponding rate collection. For details, reference may be made to the preceding description about the initial rate.

In steps 45 and 46, the MGW may send a corresponding AMR frame via the following interfaces: A interface with IP bearer (A over IP), or SIP protocol with encapsulated ISUP (Session Initiation Protocol with encapsulated ISUP, SIP-I) Nb interface. Wherein, the AMR frame includes the voice frame, no-data frame, and silence frame.
For example, the AMR frame may be sent to the BSC at the non-handover side via the A over IP interface; or the AMR frame may be sent to the MGW at the non-handover side via the SIP-I Nb interface.

After the preceding steps are executed, other steps involved in the handover procedure may continue to be executed. For example, steps 303 to 314 continue to be executed.

According to this embodiment, when a TrFO call is formed after the handover, a message that is used for rate adjustment is sent to a non-handover side, where the message may be used to adjust the rate of the non-handover side to an initial rate. As the initial rate is low, and the rate after the handover is also a low rate, rate matching before and after the handover may be implemented, avoiding frame loss.

In addition, handover failure may occur during the subsequent handover procedure. In this case, the original non-TrFO bearer connection needs to be maintained, and the MGW needs to request the non-handover side to adjust the AMR rate to the highest rate.

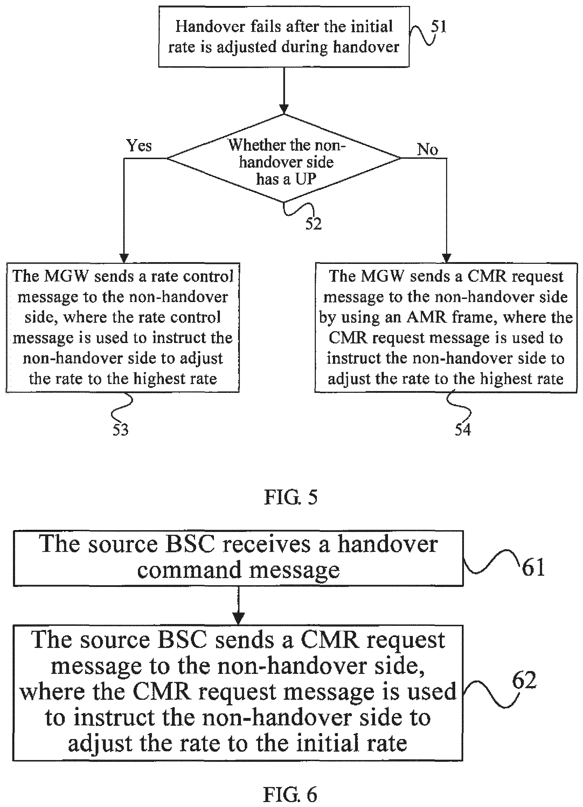

FIG. 5 is a schematic flow chart of a method according to a third embodiment of the present invention. This embodiment takes a case where a non-TrFO call is involved before handover and handover failure occurs for example. As shown in FIG. 5, this embodiment includes:
Step 51: The handover fails after the initial rate is adjusted during the handover.

For example, after the embodiment is used to instruct the non-handover side to adjust the rate to the initial rate, the handover fails due to various reasons. For example, the MSC-S fails before receiving the handover detection (Handover detect) message.

Step 52: After knowing that the handover fails, the MGW judges whether the non-handover side has a UP. If yes, step 53 is performed; otherwise, step 54 is performed.

For example, the MGW sets a timer. If its corresponding resources before the handover are not deleted within the time set by the timer, it may be known that the handover fails.

Step 53: The MGW sends a rate control message to the non-handover side, where the rate control message is used to instruct the non-handover side to adjust the rate to the highest rate.

In addition, the rate control message may also be sent via the Iu ATM interface, Iu IP interface, or BICC Nb interface.

Step 54: The MGW sends a CMR message to the non-handover side by using an AMR frame, where the CMR message is used to instruct the non-handover side to adjust the rate to the highest rate.

In this embodiment, adjusting to the highest rate may not distinguish between the case where VAD is enabled and the case where VAD is disabled.

In addition, the CMR message may also be sent to the non-handover side via the A over IP interface or SIP-I Nb interface.

By controlling the non-handover side to adjust the rate to the highest rate after the handover fails, this embodiment may maintain the original non-TrFO connection, and improve the voice quality.

FIG. 6 is a schematic flow chart of a method according to a fourth embodiment of the present invention. This embodiment takes a case where a TrFO call is involved before handover and a source BSC instructs the non-handover side to adjust the rate for example. In a non-TrFO call, the core network terminates a message, and the source BSC cannot send the message for rate adjustment to the MGW at the peer end. However, if the call is a TrFO call before the handover, the BSC may send the relevant message to the core network at the non-handover side. Therefore, as shown in FIG. 6, this embodiment includes:
Step 61: The source BSC receives a handover command message.

For specific content, reference may be made to steps 301 to 306.

Step 62: The source BSC sends a CMR message to the non-handover side, where the CMR message is used to instruct the non-handover side to adjust the rate to an initial rate.

Wherein, as the call before the handover is a TrFO call, VAD for AMR needs to be always enabled. Therefore, the following processing may be performed: When the status is silence period, a no-data (NO_DATA) frame may be used to send the CMR message, where the CMR message is used to instruct the non-handover side to adjust the rate to the initial rate. Or, if the status is non-silence period, the CMR message may be sent by using a voice frame or a silence frame, where the CMR message is used to instruct the non-handover side to adjust the rate to the initial rate.

In addition, the source BSC may send the CMR message to the MGW at the non-handover side via the A interface.

After the preceding steps are executed, other steps involved in the handover procedure may continue to be executed. For example, steps 307 to 314 continue to be executed.

According to this embodiment, when a TrFO call is formed after the handover, a message that is used for rate adjustment is sent to a non-handover side, where the message may be used to adjust the rate of the non-handover side to an initial rate. As the initial rate is low, and the rate after the handover is also a low rate, rate matching before and after the handover may be implemented, avoiding frame loss.

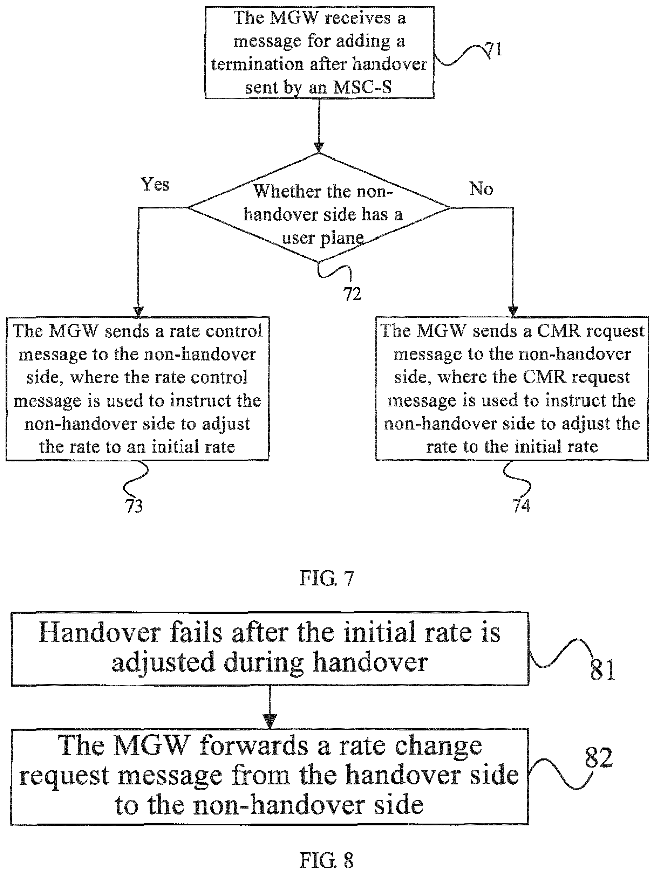

FIG. 7 is a schematic flow chart of a method according to a fifth embodiment of the present invention. This embodiment takes a case where a TrFO call is involved before handover and an MGW instructs the non-handover side to adjust the rate for example. As shown in FIG. 7, this embodiment includes:
Step 71: The MGW receives a message for adding a termination after the handover sent by an MSC-S.

For specific content, reference may be made to steps 301 and 302.

Step 72: After determining that the handover involves handing over a TrFO call to a TrFO call, the MGW judges whether the non-handover side has a user plane (UP). If yes, step 73 is performed; otherwise, step 74 is performed.

For specific content, reference may be made to step 42.

Step 73: The MGW sends a rate control (Rate Control) message to the non-handover side, where the rate control message is used to instruct the non-handover side to adjust the rate to an initial rate.

For specific content, reference may be made to step 43.

Step 74: The MGW sends a CMR message to the non-handover side, where the CMR message is used to instruct the non-handover side to adjust the rate to the initial rate.

Wherein, as the call before the handover is a TrFO call, VAD for AMR needs to be always enabled. Therefore, the following processing may be performed: When the status is silence period, a no-data (NO_DATA) frame may be used to send the CMR message, where the CMR message is used to instruct the non-handover side to adjust the rate to the initial rate. Or, if the status is non-silence period, the CMR message may be sent by using a voice frame or a silence frame, where the CMR message is used to instruct the non-handover side to adjust the rate to the initial rate.

In addition, the MGW may send the corresponding AMR frame via the following interfaces: A interface with IP bearer (A over IP) or SIP-I Nb interface.

For example, the AMR frame may be sent to the BSC at the non-handover side via the A over IP interface; or the AMR frame may be sent to the MGW at the non-handover side via the SIP-I Nb interface.

After the preceding steps are executed, other steps involved in the handover procedure may continue to be executed. For example, steps 303 to 314 continue to be executed.

According to this embodiment, when a TrFO call is formed after the handover, a message that is used for rate adjustment is sent to a non-handover side, where the message may be used to adjust the rate of the non-handover side to an initial rate. As the initial rate is low, and the rate after the handover is also a low rate, rate matching before and after the handover may be implemented, avoiding frame loss.

Similar to the scenario where a non-TrFO call is involved before the handover, handover failure may occur during the subsequent handover procedure in the embodiment as shown in FIG 6 or FIG. 7. In this case, the original TrFO bearer connection needs to be maintained, and the MGW needs to request the non-handover side to adjust the AMR rate to the highest rate.

FIG 8 is a schematic flow chart of a method according to a sixth embodiment of the present invention. This embodiment takes a case where a TrFO call is involved before handover and handover failure occurs for example. As shown in FIG 8, this embodiment includes:
Step 81: The handover fails after the initial rate is adjusted during the handover.

For specific content, reference may be made to step 51.

Step 82: After knowing that the handover fails, the MGW forwards a rate change request message from the handover side to the non-handover side.

Specifically, as the system has the self rate adjustment capability in TrFO call mode, that is, the handover side will send a rate change request message to the non-handover side. The rate change request message may gradually make the non-handover side adjust its rate to the original rate. Therefore, the MGW may no longer intercept the rate change request message from the handover side but forward it.

By controlling the non-handover side to adjust the rate to the highest rate after the handover fails, this embodiment may maintain the original TrFO connection, and improve the voice quality.

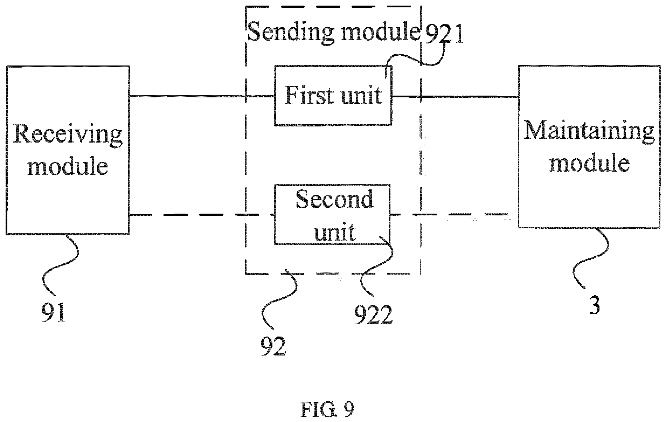

FIG. 9 is a schematic structural diagram of a device according to a seventh embodiment of the present invention, including a receiving module 91 and a sending module 92. The receiving module 91 is configured to receive a message that is used for handover, where the handover forms a TrFO call that uses a multi-rate codec after the handover. The sending module 92 is configured to send a message that is used for rate adjustment to a non-handover side that uses a multi-rate codec, so that the non-handover side adjusts a rate of the non-handover side to an initial rate after receiving the message that is used for rate adjustment.

Wherein, the device may be an MGW, and the receiving module 91 is specifically configured to receive a message for adding a termination after the handover sent by an MSC-S upon the MSC-S receives the handover request message.

The sending module 92 includes: a first unit 921 or a second unit 922; where the first unit 921 is configured to send a rate control message if the non-handover side has a UP; the second unit 922 is configured to send a CMR message if the non-handover side does not have a UP.

If a non-TrFO call is involved before the handover, the second unit 922 is specifically configured to send the CMR message by using a voice frame if VAD for a multi-rate mode is disabled; or, if the VAD for the multi-rate mode is enabled, disable the VAD, and send the CMR message by using a voice frame after disabling the VAD; or, if the VAD for the multi-rate mode is enabled and is in a silence period, send the CMR message by using a no-data frame; or, if the VAD for the multi-rate mode is enabled and is in a non-silence period, send the CMR message by using a voice frame or a silence frame.

If a TrFO call is involved before the handover, the second unit 922 is specifically configured to send the CMR message by using a no-data frame in a silence period; or send the CMR message by using a voice frame or a silence frame in a non-silence period.

This embodiment may further include a maintaining module 93, configured to maintain an original call bearer connection at the non-handover side.

The maintaining module 93 is specifically configured to: if a non-TrFO call is involved before the handover, and the non-handover side has a UP, send a rate control message that is used to adjust the rate to a highest rate to the non-handover side; or, if a non-TrFO call is involved before the handover, and the non-handover side does not have a UP, send a message that is used to adjust the rate to the highest rate to the non-handover side by using an AMR frame; or, if a TrFO call is involved before the handover, forward a rate change request message from the handover side to the non-handover side.

Or, the device is a BSC, and the receiving module 91 is specifically configured to receive a handover command message sent by an MSC-S. The sending module 92 is specifically configured to send a CMR message to the non-handover side by using a no-data frame in a silence period; or, send a CMR message to the non-handover side by using a voice frame or a silence frame in a non-silence period.

According to this embodiment, when a TrFO call is formed after the handover, a message that is used for rate adjustment is sent to a non-handover side, where the message may be used to adjust the rate of the non-handover side to an initial rate. As the initial rate is low, and the rate after the handover is also a low rate, rate matching before and after the handover may be implemented, avoiding frame loss.

It may be understood that, related features in the method and device may be referenced mutually In addition, "first" and "second" in the preceding embodiments are configured to distinguish embodiments, but do not represent superiority or inferiority of all embodiments.

It is understandable to a person having ordinary skill in the art that all or certain steps in the preceding embodiments of the present invention may be performed by instructing related hardware through a program. The program may be stored in a storage medium that can be read by a computer. When being executed, the program performs the steps in the preceding embodiments of the present invention. The storage medium may be ROM, RAM, magnetic disk, or compact disk that is able to store program codes.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments, or make equivalent substitutions to some technical features thereof, without departing from the scope of the technical solutions of the embodiments of the present invention.

## Claims

1. A rate adjustment method for Transcoder Free Operation, TrFO, voice call handover, comprising:
receiving (11), by a media gateway, MGW, a message for adding a termination after handover, wherein the message for adding the termination after the handover is sent by a mobile switch center server, MSC-S, upon the MSC-S receiving a handover request message, and **characterized in that** the handover forms a TrFO call that uses a multi-rate codec after the handover; and by
sending (12), by the MGW, a message that is used for rate adjustment to a non-handover side that uses a multi-rate codec, so that the non-handover side adjusts a rate of the non-handover side to an initial rate after receiving the message that is used for rate adjustment.

2. The method according to claim 1, wherein the sending a message that is used for rate adjustment to a non-handover side that uses a multi-rate codec comprises:
sending, by the MGW, a rate control message if the non-handover side has a user plane, UP;
or
sending, by the MGW, a code mode request, CMR, message if the non-handover side does not have a UP.

3. The method according to claim 2, wherein if a non-TrFO call is involved before the handover, the sending, by the MGW, a CMR message comprises:
if voice activity detection, VAD, for a multi-rate mode is disabled, sending, by the MGW, the CMR message by using a voice frame;
or
if VAD for the multi-rate mode is enabled, disabling, by the MGW, the VAD, and sending the CMR message by using a voice frame after disabling the VAD;
or
if VAD for the multi-rate mode is enabled and is in a silence period, sending, by the MGW, the CMR message by using a no-data frame
or
if VAD for the multi-rate mode is enabled and is in a silence period, sending, by the MGW, the CMR message by using a voice frame or a silence frame

4. The method according to claim 2, wherein if a TrFO call is involved before the handover, the sending, by the MGW, a CMR message comprises:
in a silence period, sending, by the MGW, the CMR message by using a no-data frame;
or
in a non-silence period, sending, by the MGW, the CMR message by using a voice frame or a silence frame.

5. The method according to claim 1, wherein after the sending a message that is used for rate adjustment to a non-handover side that uses a multi-rate codec, if the handover fails, the method further comprises:
if a non-TrFO call is involved before the handover, and the non-handover side has a UP, sending, by the MGW, a rate control message that is used to adjust the rate to a highest rate to the non-handover side;
or
if a non-TrFO call is involved before the handover, and the non-handover side does not have a UP, sending, by the MGW, a rate control message that is used to adjust the rate to the highest rate to the non-handover side by using an AMR frame;
or
if a TrFO call is involved before the handover, forwarding, by the MGW, a rate change request message from a handover side to the non-handover side.

6. A rate adjustment device for Transcoder Free Operation, TrFO, voice call handover, wherein the device is a media gateway, MGW, and the MGW comprising:
a receiving module (91), configured to receive a message for adding a termination after handover, wherein the message for adding a termination after the handover is sent by a mobile switch center server, MSC-S, upon the MSC-S receiving a handover request message, and **characterized in that** the handover forms a TrFO call that uses a multi-rate codec after the handover; and by
a sending module (92), configured to send a message that is used for rate adjustment to a non-handover side that uses a multi-rate codec, so that the non-handover side adjusts a rate of the non-handover side to an initial rate after receiving the message that is used for rate adjustment.

7. The device according to claim 6, wherein the sending module comprises:
a first unit (921), configured to send a rate control message if the non-handover side has a user plane, UP;
or
a second unit (922), configured to send a code mode request, CMR, message if the non-handover side does not have a UP.

8. The device according to claim 7, wherein if a non-TrFO call is involved before the handover, the second unit is specifically configured to send the CMR message by using a voice frame if voice activity detection, VAD, for a multi-rate mode is disabled; or, if the VAD for the multi-rate mode is enabled, disable the VAD, and send the CMR message by using a voice frame after disabling the VAD; or, if the VAD for the multi-rate mode is enabled and is in a silence period, send the CMR message by using a no-data frame; or, if the VAD for the multi-rate mode is enabled and is in a non-silence period, send the CMR message by using a voice frame or a silence frame.

9. The device according to claim 7, wherein if a TrFO call is involved before the handover, the second unit is specifically configured in a silence period, to send the CMR message by using a no-data frame; or send the CMR message by using a voice frame or a silence frame.

10. The device according to claim 6, further comprising:
a maintaining module (93), configured to, if the handover fails after the sending a message that is used for rate adjustment to a non-handover side that uses a multi-rate codec:
if a non-TrFO call is involved before the handover, and the non-handover side has a UP, send a rate control message that is used to adjust the rate to a highest rate to the non-handover side;
or
if a non-TrFO call is involved before the handover, and the non-handover side does not have a UP, send a rate control message that is used to adjust the rate to the highest rate to the non-handover side by using an AMR frame;
or
if a TrFO call is involved before the handover, forward a rate change request message from a handover side to the non-handover side.

## Patentansprüche

1. Ratenanpassungsverfahren für eine Sprachanrufübergabe bei transcoderfreiem Betrieb, TrFO-Sprachanrufübergabe, das Folgendes umfasst:
Empfangen (11) durch ein "Media Gateway", MGW, einer Nachricht zum Hinzufügen eines Abschlusses nach der Übergabe, wobei die Nachricht zum Hinzufügen des Abschlusses nach der Übergabe durch einen Mobilfunkvermittlungsstellen-Server, MSC-S, gesendet wird, wenn der MSC-S eine Übergabeanforderungsnachricht empfängt, und **dadurch gekennzeichnet, dass** die Übergabe einen TrFO-Anruf bildet, die einen Mehrraten-Codec nach der Übergabe verwendet; und durch
Senden (12) durch das MGW einer Nachricht, die zur Ratenanpassung verwendet wird, zu einer Nichtübergabeseite, die einen Mehrraten-Codec verwendet, so dass die Nichtübergabeseite eine Rate der Nichtübergabeseite nach dem Empfangen der Nachricht, die zur Ratenanpassung verwendet wird, auf eine Anfangsrate anpasst.

2. Verfahren nach Anspruch 1, wobei das Senden einer Nachricht, die zur Ratenanpassung verwendet wird, zu einer Nichtübergabeseite, die einen Mehrraten-Codec verwendet, Folgendes umfasst:
Senden durch das MGW einer Ratensteuerungsnachricht, falls die Nichtübergabeseite eine Anwenderebene, UP, aufweist;
oder
Senden durch das MGW einer Codebetriebsartanforderungs-Nachricht, CMR-Nachricht, falls die Nichtübergabeseite keine UP aufweist.

3. Verfahren nach Anspruch 2, wobei dann, wenn ein Nicht-TrFO-Anruf vor der Übergabe beteiligt ist, das Senden durch das MGW einer CMR-Nachricht Folgendes umfasst:
falls Sprachaktivitätsdetektion, VAD, für eine Mehrratenbetriebsart deaktiviert ist, Senden durch das MGW einer CMR-Nachricht unter Verwendung eines Sprachrahmens;
oder
falls VAD für die Mehrratenbetriebsart aktiviert ist, Deaktivieren durch das MGW der VAD und Senden der CMR-Nachricht unter Verwendung eines Sprachrahmens nach dem Deaktivieren der VAD;
oder
falls VAD für die Mehrratenbetriebsart aktiviert ist und in einer Sprechpausenperiode ist, Senden durch das MGW der CMR-Nachricht unter Verwendung eines Nichtdatenrahmens,
oder
falls VAD für die Mehrratenbetriebsart aktiviert ist und in einer Sprechpausenperiode ist, Senden durch das MGW der CMR-Nachricht unter Verwendung eines Sprachrahmens oder eines Sprechpausenrahmens.

4. Verfahren nach Anspruch 2, wobei dann, wenn ein TrFO-Anruf vor der Übergabe beteiligt ist, das Senden durch das MGW einer CMR-Nachricht Folgendes umfasst:
in einer Sprechpausenperiode Senden durch das MGW der CMR-Nachricht unter Verwendung eines Nichtdatenrahmens;
oder
in einer Nichtsprechpausenperiode Senden durch das MGW der CMR-Nachricht unter Verwendung eines Sprachrahmens oder eines Sprechpausenrahmens.

5. Verfahren nach Anspruch 1, wobei das Verfahren nach dem Senden einer Nachricht, die zur Ratenanpassung verwendet wird, zu einer Nichtübergabeseite, die einen Mehrraten-Codec verwendet, falls die Übergabe fehlschlägt, ferner Folgendes umfasst:
falls ein Nicht-TrFO-Anruf vor der Übergabe beteiligt ist und die Nichtübergabeseite eine UP aufweist, Senden durch das MGW einer Ratensteuerungsnachricht, die verwendet wird, um die Rate auf eine höchste Rate anzupassen, zu der Nichtübergabeseite;
oder
falls ein Nicht-TrFO-Anruf vor der Übergabe beteiligt ist und die Nichtübergabeseite keine UP aufweist, Senden durch das MGW einer Ratensteuerungsnachricht, die verwendet wird, um die Rate auf die höchste Rate anzupassen, zu der Nichtübergabeseite unter Verwendung eines AMR-Rahmens;
oder
falls ein TrFO-Anruf vor der Übergabe beteiligt ist, Weiterleiten durch das MGW einer Ratenänderungsanforderungsnachricht von einer Übergabeseite zu der Nichtübergabeseite.

6. Ratenanpassungsvorrichtung für Sprachanrufiibergabe bei transcoderfreiem Betrieb, TrFO-Sprachanrufübergabe, wobei die Vorrichtung ein "Media Gateway", MGW, ist und das MGW Folgendes umfasst:
ein Empfangsmodul (91), das konfiguriert ist, eine Nachricht zum Hinzufügen eines Abschlusses nach der Übergabe zu empfangen, wobei die Nachricht zum Hinzufügen eines Abschlusses nach der Übergabe durch einen Mobilfunlcvermittlungsstellen-Server, MSC-S, gesendet wird, wenn der MSC-S eine Übergabeanforderungsnachlicht empfängt, und **dadurch gekennzeichnet, dass** die Übergabe einen TrFO-Anruf bildet, der einen Mehrraten-Codec nach der Übergabe verwendet; und durch
ein Sendemodul (92), das konfiguriert ist, eine Nachricht, die zur Ratenanpassung verwendet wird, zu einer Nichtübergabeseite, die einen Mehrraten-Codec verwendet, zu senden, so dass die Nichtübergabeseite eine Rate der Nichtübergabeseite nach dem Empfangen der Nachricht, die zur Ratenanpassung verwendet wird, auf eine Anfangsrate anpasst.

7. Vorrichtung nach Anspruch 6, wobei das Sendemodul Folgendes umfasst:
eine erste Einheit (921), die konfiguriert ist, eine Ratensteuerungsnachricht zu senden, falls die Nichtübergabeseite eine Anwenderebene, UP, aufweist;
oder
eine zweite Einheit (922), die konfiguriert ist, eine Codebetriebsartanforderungs-Nachricht, CMR-Nachricht, zu senden, falls die Nichtübergabeseite keine UP aufweist.

8. Vorrichtung nach Anspruch 7, wobei dann, wenn ein Nicht-TrFO-Anruf vor der Übergabe beteiligt ist, die zweite Einheit insbesondere konfiguriert ist, die CMR-Nachricht unter Verwendung eines Sprachrahmens zu senden, falls Sprachaktivitätsdetektion, VAD, für eine Mehrratenbetriebsart deaktiviert ist; oder, falls die VAD für die Mehrratenbetriebsart aktiviert ist, die VAD zu deaktivieren und die CMR-Nachricht unter Verwendung eines Sprachrahmens nach dem Deaktivieren der VAD zu senden; oder, falls die VAD für die Mehrratenbetriebsart aktiviert ist und in einer Sprechpausenperiode ist, die CMR-Nachricht unter Verwendung eines Nichtdatenrahmens zu senden; oder, falls die VAD für die Mehrratenbetriebsart aktiviert ist und in einer Nichtsprechpausenperiode ist, die CMR-Nachricht unter Verwendung eines Sprachrahmens oder eines Sprechpausenrahmens zu senden.

9. Vorrichtung nach Anspruch 7, wobei dann, wenn ein TrFO-Anruf vor der Übergabe beteiligt ist, die zweite Einheit insbesondere konfiguriert ist, in einer Sprechpausenperiode die CMR-Nachricht unter Verwendung eines Nichtdatenrahmens zu senden; oder die CMR-Nachricht unter Verwendung eines Sprachrahmens oder eines Sprechpausenrahmens zu senden.

10. Vorrichtung nach Anspruch 6, die ferner Folgendes umfasst:
ein Haltemodul (93), das konfiguriert ist, falls die Übergabe fehlschlägt, nach dem Senden einer Nachricht, die zur Ratenanpassung verwendet wird, zu einer Nichtübergabeseite, die einen Mehrraten-Codec verwendet:
falls ein Nicht-TrFO-Anruf vor der Übergabe beteiligt ist und die Nichtübergabeseite eine UP aufweist, eine Ratensteuerungsnachricht, die verwendet wird, um die Rate auf eine höchste Rate anzupassen, zu der Nichtübergabeseite zu senden;
oder
falls ein Nicht-TrFO-Anruf vor der Übergabe beteiligt ist und die Nichtübergabeseite keine UP aufweist, eine Ratensteuerungsnachricht, die verwendet wird, um die Rate auf die höchste Rate anzupassen, zu der Nichtübergabeseite unter Verwendung eines AMR-Rahmens zu senden;
oder
falls ein TrFO-Anruf vor der Übergabe beteiligt ist, eine Ratenänderungsanforderungsnachricht von einer Übergabeseite zu der Nichtübergabeseite weiterzuleiten.

## Revendications

1. Procédé d'ajustement de débit pour un transfert d'appel vocal par opération sans transcodeur, TrFO, comprenant :
la réception (11), par une passerelle multimédia, MGW, d'un message d'ajout d'une terminaison après le transfert, dans lequel le message d'ajout d'une terminaison après le transfert est envoyé par un serveur de centre de commutation de services mobiles, MSC-S, à la réception par le MSC-S d'un message de requête de transfert, et **caractérisé en ce que** le transfert forme un appel TrFO qui utilise un codec à débits multiples après le transfert ; et par
l'envoi (12), par la MGW, d'un message qui est utilisé pour un ajustement de débit, à un côté de non-transfert qui utilise un codec à débits multiples, de telle sorte que le côté de non-transfert ajuste un débit du côté de non-transfert à un débit initial après la réception du message qui est utilisé pour l'ajustement de débit.

2. Procédé selon la revendication 1, dans lequel l'envoi d'un message qui est utilisé pour l'ajustement de débit à un côté de non-transfert qui utilise un codec à débits multiples camprend :
l'envoi, par la MGW, d'un message de commande de débit si le côté de non-transfert a un plan utilisateur, UP;
ou
l'envoi, par la MGW, d'un message de requête de mode de code, CMR, si le côté de non-transfert n'a pas d'UP.

3. Procédé selon la revendication 2, dans lequel si un appel non TrFO est impliqué avant le transfert, l'envoi, par la MGW, d'un message CMR comprend :
si une détection d'activité vocale, VAD, d'un mode à débits multiples est désactivée, l'envoi, par la MGW, du message CMR en utilisant une trame vocale;
ou
si la VAD pour le mode à débits multiples est activée, la désactivation, par la MGW, de la VAD, et l'envoi du message CMR en utilisant une trame vocale après la désactivation de la VAD ;
ou
si la VAD pour le mode à débits multiples est activée et se trouve dans une période de silence, l'envoi, par la MGW, du message CMR en utilisant une trame sans données
ou
si la VAD pour le mode à débits multiples est activée et se trouve dans une période de silence, l'envoi, par la MGW, du message CMR en utilisant une trame vocale ou une trame de silence.

4. Procédé selon la revendication 2, dans lequel si un appel TrFO est impliqué avant le transfert, l'envoi, par la MGW, d'un message CMR comprend :
dans une période de silence, l'envoi, par la MGW, du message CMR en utilisant une trame sans données ;
ou
dans une période de non-silence, l'envoi, par la MGW. du message CMR en utilisant une trame vocale ou une trame de silence.

5. Procédé selon la revendication 1, comprenant en outre après l'envoi d'un message qui est utilisé pour l'ajustement de débit à un côté de non-transfert qui utilise un codec à débits multiples, si le transfert échoue :
si un appel non TrFO est impliqué avant le transfert, et le côté de non-transfert a un UP, l'envoi, par la MGW, d'un message de commande de débit qui est utilisé pour ajuster le débit au débit le plus élevé au côté de non-transfert ;
ou
si un appel non TrFO est impliqué avant le transfert, et le côté de non-transfert n'a pas d'UP, l'envoi, par la MGW, d'un message de commande de débit qui est utilisé pour ajuster le débit au débit le plus élevé au côté de non-transfert en utilisant une trame AMR;
ou
si un appel TrFO est impliqué avant le transfert, l'acheminement, par la MGW, d'un message de requête de changement de débit depuis un côté de transfert vers le côté de non-transfert.

6. Dispositif d'ajustement de débit pour un transfert d'appel vocal par opération sans transcodeur, TrFO, dans lequel le dispositif est une passerelle multimédia, MGW, et la MGW comprenant
un module de réception (91), configuré pour recevoir un message d'ajout d'une terminaison après le transfert, dans lequel le message d'ajout d'une terminaison après le transfert est envoyé par un serveur de centre de commutation de services mobiles, MSC-S, à la réception par le MSC-S d'un message de requête de transfert, et **caractérisé en ce que** le transfert forme un appel TrFO qui utilise un codec à débits multiples après le transfert ; et par
un module d'envoi (92), configuré pour envoyer un message qui est utilisé pour l'ajustement de débit à un côté de non-transfert qui utilise un codec à débits multiples, de telle sorte que le côté de non-transfert ajuste un débit du côté de non-transfert à un débit initial après la réception du message qui est utilisé pour l'ajustement de débit.

7. Dispositif selon la revendication 6, dans lequel le module d'envoi comprend :
une première unité (921), configurée pour envoyer un message de commande de débit si le côté de non-transfert a un plan utilisateur, UP ;
ou
une seconde unité (922), configurée pour envoyer un message de requête de mode de code, CMR, si le côté de non-transfert n'a pas d'UP.

8. Dispositif selon la revendication 7, dans lequel si un appel non TrFO est impliqué avant le transfert, la seconde unité est configurée spécifiquement pour envoyer le message CMR en utilisant une trame vocale si une détection d'activité vocale, VAD, pour un mode à débits multiples est désactivée ; ou, si la VAD pour le mode à débits multiples est activée, désactiver la VAD, et envoyer le message CMR en utilisant une trame vocale après la désactivation de la VAD ; ou, si la VAD pour le mode à débits multiples est activée et se trouve dans une période de silence, envoyer le message CMR en utilisant une trame sans données ; ou, si la VAD pour le mode à débits multiples est activée et se trouve dans une période de non-silence, envoyer le message CMR en utilisant une trame vocale ou une trame de silence.

9. Dispositif selon la revendication 7, dans lequel si un appel non TrFO est impliqué avant le transfert, la seconde unité est configurée spécifiquement dans une période de silence, pour envoyer le message CMR en utilisant une trame sans données, ou envoyer le message CMR en utilisant une trame vocale ou une trame de silence.

10. Dispositif selon la revendication 6, comprenant en outre :
un module de maintien (93), configuré pour,
si le transfert échoue après l'envoi d'un message qui est utilisé pour l'ajustement de débit à un côté de non-transfert qui utilise un codec à débits multiples :
si un appel non TrFO est impliqué avant le transfert, et le côté de non-transfert a un UP, envoyer un message de commande de débit qui est utilisé pour ajuster le débit au débit le plus élevé au côté de non-transfert ;
ou
si un appel non TrFO est impliqué avant le transfert, et le côté de non-transfert n'a pas d'UP, envoyer un message de commande de débit qui est utilisé pour ajuster le débit au débit le plus élevé au côté de non-transfert en utilisant une trame AMR ;
ou
si un appel TrFO est impliqué avant le transfert, acheminer un message de requête de changement de débit depuis un côté de transfert vers le côté de non-transfert.
